# EUROPEAN PATENT SPECIFICATION

(11) **EP 2 874 735 B1**
(45) Date of publication and mention of the grant of the patent: **23.12.2015**
(21) Application number: 13765505.6
(22) Date of filing: 17.07.2013
(51) Int. Cl.: B01F 3/18, B01F 5/18, B01J 2/00, B28C 5/04, B01F 15/02

(54) **SYSTEM AND METHOD FOR THE CONTINUOUS PREPARATION OF COLORED MATERIALS IN POWDER FORM FOR THE MANUFACTURE OF CERAMIC ARTICLES**
SYSTEM UND VERFAHREN ZUR KONTINUIERLICHEN HERSTELLUNG GEFÄRBTER MATERIALIEN IN PULVERFORM ZUR HERSTELLUNG VON KERAMIKARTIKELN
SYSTÈME ET PROCÉDÉ POUR LA PRÉPARATION CONTINUE DE MATÉRIAUX COLORÉS SOUS FORME DE POUDRE POUR LA FABRICATION D'ARTICLES EN CÉRAMIQUE

(30) Priority: 18.07.2012 IT GE20120070
(43) Date of publication of application: 27.05.2015
(73) Proprietor: Pilegar S.A., 11000 Montevideo (UY)
(72) Inventor: Cristian Confetti, 1053 C.A. B.A, Buenos Aires (AR)
(74) Representative: De Anna, Pier Luigi
(86) International application number: PCT/IB2013/055870
(87) International publication number: WO 2014/013446

(56) References cited:
- WO-A1-2009/007788
- FR-A- 1 038 999
- US-A1- 2008 113 197

## Description

The present invention relates to a system and a method for the preparation of materials in powder form with controlled moisture which constitute the initial product for the manufacture of ceramic articles such as fine porcelain stoneware tiles, single fired tiles and other similar tiles.

More specifically, but not exclusively, the invention in question is usefully applied for the preparation of powders for the molding of porcelain stoneware tiles.

Systems for the preparation of powders destined for the molding of porcelain stoneware tiles are already known. The powders prepared using these systems are used for filling the molding cells of molds associated with conventional ceramic presses.

Some prior art systems include a plurality of spray-dryers which are fed with different types of ceramic slip. The products in powder form exiting from the spray-dryers are sent, via continuous belt conveyors, to a store comprising a plurality of silos, each of which is provided to contain a product in powder form of a given color.

The products in powder form of the required color are then sent, time by time, according to requirements, from the store to the ceramic presses.

However, these systems are considerably complex and large in size. In particular, they comprise a considerable number of collection silos (at least one silo associated with each type of product in powder form), and a relatively high number of spray-dryers and a somewhat complicated system for handling the various types of colored powders.

According to the wet method, said granules are produced substantially from a concentrated solution containing pigments, ceramic mix and flocculant, through grinding of said concentrated solution with a series of discontinuous or continuous ball mills to obtain a suspension known as a concentrated colored slip, homogenization of the concentrated colored slip in stirred tanks, feeding of the concentrated colored slip into a tank in which, by means of a stirrer, it is mixed uniformly with neutral slip, subsequent atomization of the colored slip, and storing of the atomized material which is colored throughout its entire mass. An improvement of this technique is described in EP1772243.

The widespread use of similar prior art methods has brought to light various drawbacks, such as excessive plant complexity, with consequent maintenance, adjustment and reliability problems, excessive plant size, the need to store a considerable quantity of atomized product for each individual color, the need to wash the plant each time an atomized product of a different color is to be obtained, and finally relatively high operating costs due to amortization of the plant purchase price and to energy consumption. The final cost of the atomized material is high as coloring the entire mass of granules results in high use of pigments and colorants, the cost of which is much higher than that of the other materials of which the concentrated colored slip is composed.

The "dry method" of coloring ceramic powders has also been known for some time, in which atomized or granulated ceramic powders are mixed with pure colorants in powder form.

A method of this type forms the subject matter of industrial patent applications EP 916462, ITMO99A000151, and EP1338392.

EP 916462 relates to a technique for semi-continuous mechanical mixing of ceramic material of similar particle size with colorant material with much smaller granules to those of the ceramic material. EP1338392 provides for mixing of the colorant, aerated by insufflation of air with micronized silica by sieving and subsequent mechanical mixing with the clay material in powder form.

US20100068087 relates to a method of mixing metallic powders with ceramic powders in an electrically insulating vessel and agitating the vessel by rotation for a time sufficient to amalgamate the two powders. This technique is used to for the preparation of composite materials with a metal matrix.

FR 1 038 999 discloses, see figure 1, a system suitable for the preparation of colored powder materials for the manufacture of ceramic tiles, in accordance with the preamble of claim 1. The system comprises a mixer constituted by an upper cover (4) connected to the supply line (1) of the base material and by a mixing chamber (9); a vibrating frame (3) located between upper cover and mixing chamber, the vibrating frame is connected with seal with the mixing cylinder; and a perforated baffle fixed to the vibrating frame.

However, these prior art dry coloring techniques do not appear to be able to provide satisfactory results, both as regards uniformity in the distribution of colorants and their mixing with "neutral" (i.e. non colored) base ceramic powders, and in relation to the brightness or brilliance of the coloring obtained after firing and to the effective penetration of the color.

In fact, this is not an actual penetration of the color inside the granules, which would have the drawback of increasing the costs of the coloring mass, but rather a somewhat ineffective statistical distribution of the coloring material on the surface of the granule, which is obtained with the prior art systems.

The object of the present invention is therefore to eliminate the aforesaid limits and the drawbacks of the prior art, providing an apparatus and a method for the continuous preparation of colored powders destined for the molding of ceramic tiles, according to which the coloring material uniformly covers each single granule of the base powder, and which also makes it possible to considerably simplify the operations to store and transport the material in powder form.

Another object of the invention is more specifically that of facilitating dry mixing, making the colorants very fluid. Yet another object of the invention is that of producing an apparatus, relatively simple and economic and with relatively small in size, for the preparation of colored powders destined for the molding of ceramic tiles characterized by a high level of uniformity and quality. The technical features of the present invention, according to the aforesaid objects, are clearly indicated in the contents of the claims set forth below.

This object is achieved by means of an apparatus for the preparation of colored materials in powder form for the manufacture of ceramic tiles, which comprises a mixer constituted by an upper cover connected to the supply line of the base material and by a mixing chamber; a vibrating frame located between upper cover and mixing chamber; a perforated baffle fixed to the vibrating frame, the vibrating frame is connected with seal to the mixing cylinder.

The apparatus provides for a system for the generation of an operating vacuum pressure in the upper cover and a system for injection of the colorant at the base of the mixing chamber.

According to a preferred embodiment, inside the upper cover the apparatus contains a sprinkling device of the base material comprising a telescoping cover adjustable in height inserted in the supply line, conical in shape in the part outside the supply line and separator plates fixed to the perforated baffle. The lower part of the perforated baffle fixed to the vibrating frame can have a conveyor plate integral with the vibrating frame.

According to a preferred embodiment, the mixer has an ionized air injection pipe on the supply line upstream of the coupling in the upper part of the upper cover and/or a second ionized air injection pipe on the supply line of the colorant additive.

A further aspect of the invention provides for a method for the preparation of colored materials in powder form for the manufacture of ceramic tiles, wherein atomized and granulated ceramic material with uniform particle size containing or not containing coloring substances is fed uniformly into a chamber under vacuum pressure with respect to the mixing chamber in connection with said chamber through a vibrated perforated baffle; coloring particles are injected at the base of a mixing chamber; the atomized and/or granulated ceramic material falls by gravity and is sprinkled inside the mixing chamber; and mixing in gaseous phase of the atomized and/or granulated ceramic material with the rising current of coloring particles.

Further features and advantages of the invention in question will be apparent in the detailed description below, provided with reference to the accompanying drawings, which represent purely an exemplary and non-limiting embodiment thereof.
FIG. 1 shows an apparatus produced in accordance with the present invention, by means of which it is possible to carry out the process in question;
FIG. 2 shows a detail of the mixer in accordance with the present invention according to the diagram of FIG. 1;
FIG. 3 shows the path of the supply material and of the coloring material inside the mixer;
FIG. 4.1 shows a detail of the conical distribution cover according to a preferred embodiment
FIG. 4.2 shows a detail of the suction system according to a preferred embodiment;
FIG. 4.3 shows a detail of the pigment injection nozzle according to a preferred embodiment;
FIG. 4.4 shows a detail of the discharge cone according to a preferred embodiment;

### Detailed description of the invention

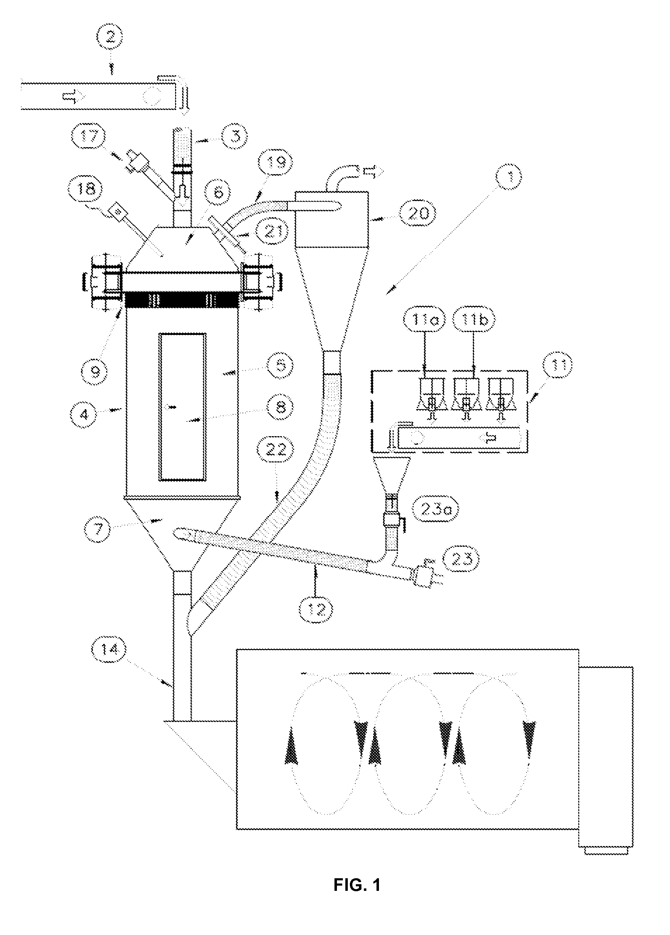

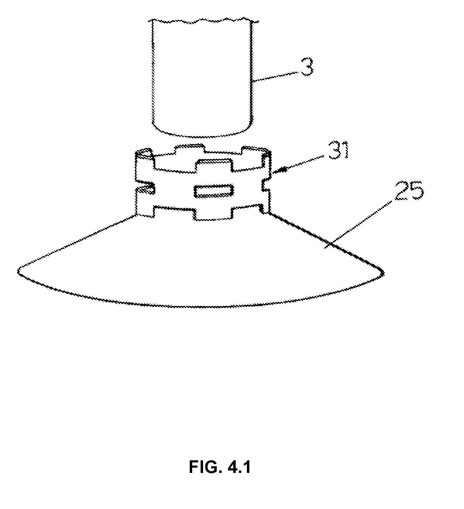

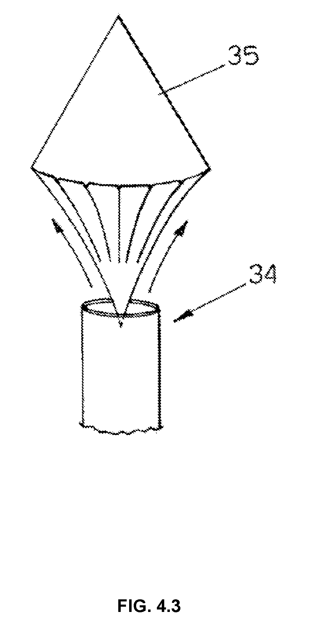

As shown in FIG. 1, the system (1) comprises a base material feeder (2), which can be a weighing belt, through a loading hopper (not shown) located directly on the supply line (3) of the mixer (4). The mixer (4) is constituted by a cylindrical central part (5) closed at the ends by truncated cone-shaped sections (6, 7) having the base of the same diameter as the cylindrical part. The upper truncated cone-shaped section (6), namely upper cover (6), is connected in the upper part to the supply line (3) of the base material, which falls through gravity into the line starting from the loading hopper and weighing belt. The mixing cylindrical chamber (5) has an inspection window (8), preferably longitudinal, made of transparent material, which enables visual monitoring of the mixing area of the cylindrical chamber (5). The upper cover (6) is connected to the mixing cylinder through a vibrating frame (9), preferably cylindrical in shape, which produces a seal between the cover (6) and the mixing cylinder. The coloring additive is added through a loading battery (10) provided with metering devices (volumetric or gravimetric) (11) of primary colors (11 a, 11 b, 11c...). The coloring additive is added through a line 12, which is coupled with the lower part of the lower cone (7) of the mixing system (4) through an injector (34). According to a preferred embodiment, FIG. 4.3, the injector (34) is provided with a conical nozzle (35) having an aerodynamic profile with spiral shaped radial grooves to facilitate the formation of a rising current of colorants and to increase the retention time of the colorant in the mixing chamber and consequently mixing thereof with the base material.

The lower cone (7) collects the pulverulent base material covered with coloring additive which descends by gravity inside the mixing cylinder (5). Through the line (14) the particles of base material covered with colorant are sent, according to a preferred embodiment, to the subsequent processing steps, for example to an amalgamation chamber, not included in the present invention, where the particles are amalgamated and sent toward the unloading hopper, re-granulation, flaking , micronization, press loading and other prior art systems, not represented here as not essential to the invention.

The supply line (3) is connected upstream of the coupling in the upper part of the upper cover (6) with an ionized air injection pipe (17). A pressure switch (18) is located in the conical part of the cover (6) to control the operating pressure and the suction line (19) connected to the suction cyclone (20). The suction line (19) contains a volumetric suction valve of proportional type (21). The discharge (22) of the suction cyclone (20) is connected to the discharge line (14) of the mixer.

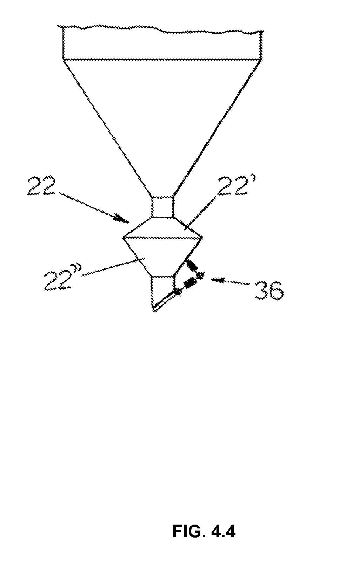

The discharge cone (22), FIG. 4.4, is preferably formed by a cone (22') and a counter-cone (22") and closing counterweight, with discontinuous opening through the action of an associated pneumatic cylinder (36) on the counterweight. In the washing steps the pneumatic cylinder is opened to facilitate cleaning.

A second ionized air injector (23) is located on the line (12) for connection between the battery of metering devices (11) for loading the coloring material.

An injector/nebulizer (23a) is located upstream of the Venturi ionized air injection tube (23), to convey and nebulize the colorants prepared in the battery of metering devices.

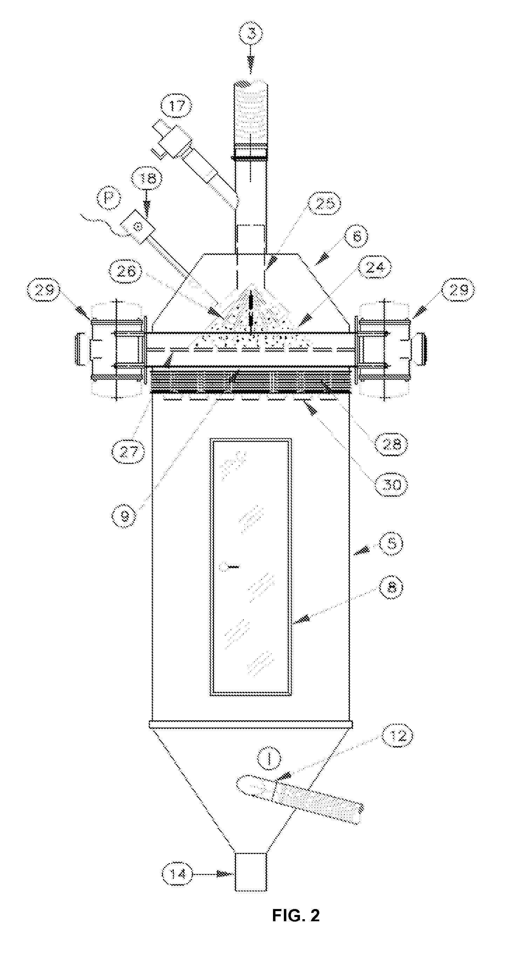

FIG. 2 shows some constructional details according to preferred embodiments of the mixer (4) described previously. The base material from the supply line enters the truncated-cone shaped upper cover and through a sprinkler device (24) is distributed uniformly over the vibrating system (9). The sprinkler device (24) is constituted by a telescoping cover (25) adjustable in height inserted in the supply line, conical in shape in the part outside the supply line (3) and inside the conical cover (6). According to a preferred embodiment, the cover (25) has the shape of a perforated conical cover in which the telescoping part has the shape of a slotted cylindrical tube (31) partly inserted in the supply line (3) and partly forming, through the slots, a first distributor of the base material coming from the line (3) onto the perforated conical surface of the telescoping cover (25).

In this way, uniform distribution of the base material to be colored is obtained on the entire conical cover.

Located under the telescoping conical cover (25), fixed to the circular vibrating frame (9) is a perforated baffle, preferably conical in shape. The inclination of the conical section of the perforated baffle and the diameter of the holes vary according to particle size, fluidity and flow rate of the base material to be processed. Fixed to the perforated baffle (27) are separator plates (26) that act on the base material. The separator plates distribute the base material uniformly on the perforated baffle (27). The conical cover (6) is fixed to the circular vibrating frame (9).

Due to the combined effect of adjustable telescoping cover (25), separator plates (26), slotted cylindrical tube (31) and perforated baffle (27), the base material is distributed uniformly inside the mixing cylinder (5).

The circular vibrating frame (9) is fixed to the mixing cylinder (5) through a bellows baffle (28) which enables absorption of the deriving vibrations and ensures the seal thereof. The vibrations are imparted by pairs of electrical vibrators (29) fixed externally to the circular vibrating frame (9).

A conveyor plate (30) is present in the lower part of the upper cover (6) to unify and limit the direction of the sprinkling effect of the base material, preventing rebound that could create undesirable flows thereof inside the mixing cylinder (5) below, reducing the efficiency and efficacy of mixing.

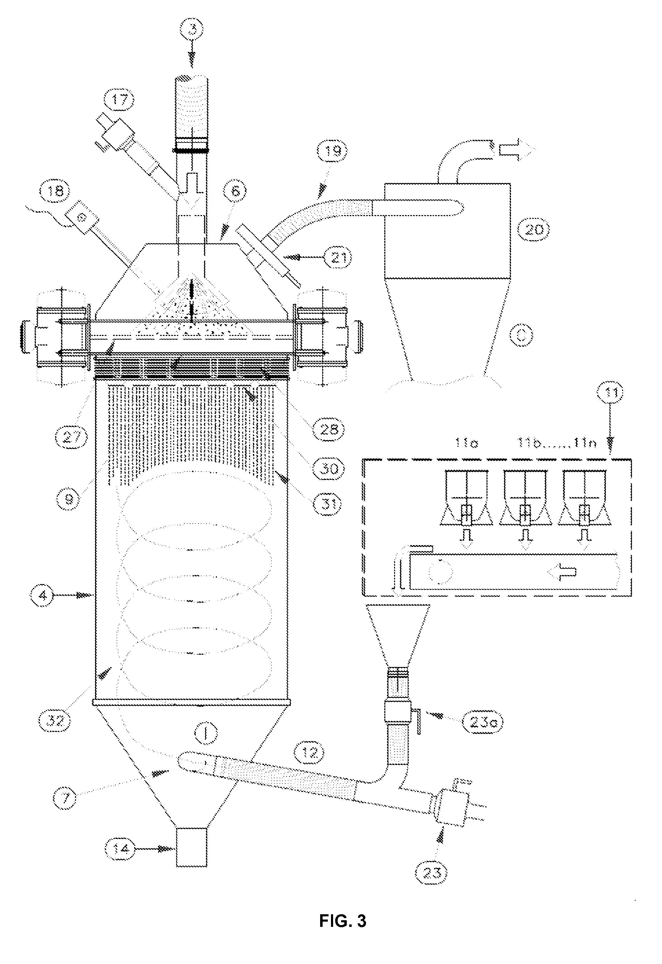

Fig. 3 shows the base material being sprinkled inside the mixing cylinder due to the combined action of conical cover/telescoping cover/separator plates/vibrating perforated baffle. Inside the mixing chamber the coloring additive, metered with the metering devices (11 A, 11 B, 11 C), is insufflated at the base of the lower cone of the mixing cylinder and rises inside the mixing chamber following a spiral path. The height of the mixing cylinder determines the contact time between base material and additive, and therefore the external covering of the granules of base materials by the colorant. The base material in atomized and/or granulated form is sprinkled between the mesh of the vibrating frame and encounters the rising cloud of coloring additive.

The suction cyclone (20) maintains a vacuum pressure regulated by the volumetric suction valve (21) as a function of the operating values established and controlled by the pressure switch (18).

Generation of a vacuum pressure in the conical cover of the mixing system can facilitate the rising circulation of the coloring additive, thereby enabling a large contact area between additive and base material.

The suction cyclone (20) recovers the granules of base material of smaller size and a small percentage of coloring additive. Through fine adjustment during operation of the vacuum pressure created by the cyclone (20) and as a function of the particle size of the base material and of the coloring additive it is possible to reduce recovery through the cyclone to a minimum. The best results are obtained when the particle size of the base material and of the coloring additive do not vary by more than 25% from its average value.

Through the line (22, FIG. 1) the material, base material of small size and coloring additive, are recycled on the delivery line from the mixing chamber. The ratio between recycled mass and mass delivered from the mixing cylinder must never exceed 5%, in order not to compromise the uniformity of the colors of the ceramic masses after firing.

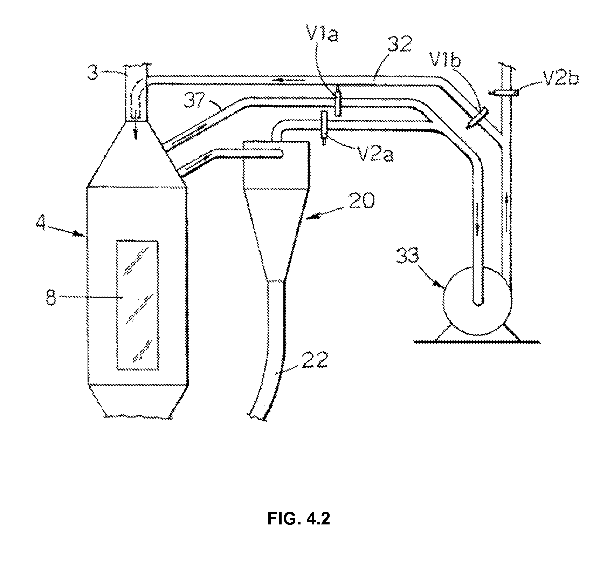

FIG. 4.2 refers to a preferred embodiment of the cyclone (20). During the operating step (with loading of base material and injection of colorant), the more volatile material drawn in is redirected directly into the supply line (3) of the base [material] through the line (32) for immediate recovery of the material and immediate return into the system. At the end of the cycle, when it is necessary to clean the system, and base material and colorant are no longer supplied, the material drawn in is abated in the cyclone (20) and directed to the delivery line (22). During the washing step at the end of the pigmentation cycle, the extractor (33) increases the operating vacuum pressure to obtain immediate suction of the volatile material and reduce washing times to a minimum. A suitable system of valves (V1a, V1 b, V2a, V2b) regulates the different operating and washing steps until the operating situation is restored for a new base material coloring cycle.

The inspection window (8) enables visual monitoring of the area in which the granules of base material are covered by the coloring additive.

Through the injectors-ionizers (17, 21), ionized air can be fed respectively to the supply line (3) of the base [material] and to the supply line (12) of the coloring additive. The effect of the ionized air is abatement and neutralization of the electrostatic charges that form in the preparation step of the base material and of the coloring additive. The granules of base material and the additive powders tend to become charged with electrostatic charges of the same sign due to phenomena of rubbing with the plastic materials that the granules encounter while being conveyed through flexible pipes, down pipes, etc. The presence of electrostatic charges both on the surface of the granules of base material and on the surface of the granules of additive makes it difficult for the additive to adhere to the granules. The injection of ionized air enables neutralization of the surface electrostatic charges and therefore improves adhesion of the coloring additive to the granules of base material.

According to a preferred embodiment, the system according to the invention is provided with an electronic control panel capable of optimizing the process parameters of the system.

The electronic control system enables control and regulation of:
- the vibration frequency of the vibrators present on the vibrating frame
- the operating vacuum pressure in the upper cover
- the ionized air injection pressure in the delivery line of the base material
- the injection pressure of the coloring additive injector
- the operating temperature
- the clogging sensors
- the function alarms

According to a further aspect, the invention relates to a method for the preparation of colored materials in powder form for the manufacture of ceramic articles comprising the following operating steps.

The atomized and/or granulated ceramic base material for the manufacture of ceramic articles previously prepared having controlled particle size is supplied through a loading hopper provided with feeder, preferably with volumetric or gravimetric belt located directly on the supply line of a mixture constituted by two upper and lower separator elements. The base material enters the upper element in which a vacuum pressure is created with respect to the lower element, encounters an ionized air flow for neutralizing the surface electrostatic charges that are produced during the steps to prepare and transport the base material. The base material falls by gravity and is distributed uniformly inside the upper element, preferably with truncated cone shaped section, through the combined mechanical action on the base material of a telescoping cover adjustable in height inserted in the supply line,a slotted cylindrical tube and of separator plates fixed to the perforated baffle. Through the same perforated baffle fixed to a vibrating system, the atomized and/or granulated ceramic base material falls by gravity in the form of ultra-fine and uniform spray into the lower element of the system. The coloring additive, previously metered, is injected at the base of the lower element together with a jet of ionized air for neutralizing the electrostatic charges. The vacuum pressure created in the upper element together with the action of the injector/nebulizer pushes the coloring additive upward inside the lower element, where it encounters the atomized and/or granulated ceramic base material being sprinkled.

Adhesion of the coloring additive to the surface of the atomized and/or granulated ceramic base material is guaranteed by the hygroscopic nature of the coloring additive and by the intrinsic moisture of the base material. To improve adhesion it is possible to use, according to preferred embodiments, adhesives previously metered in the base material.

According to a preferred embodiment, the coloring additive is mixed to an electrostatically chargeable additive in order to improve adhesion between coloring additive and base material to be colored. The system is provided with means for neutralizing the electrostatic charges of the base material. The coloring additive mixed with the electrostatically chargeable additive is electrostatically charged before injection into the supply line (12) of the coloring additive through a system capable of activating the latent charges of the coloring additives or chargeable materials previously mixed with the coloring additive. According to this preferred embodiment, the three principles of adhesion of the coloring additive to the base material to be colored are contact, hygroscopic attraction or through the action of adhesives and electrostatics.

The vacuum pressure inside the mixer is guaranteed by a cyclone system that creates a vacuum pressure in the upper element of the mixer. The vacuum pressure is regulated by adjustment of a volumetric valve located in the suction side of the cyclone system based on the values supplied by a pressure switch.

The method according to the invention enables covering of atomized and/or granulated ceramic base material for the ceramic industry with colorants if necessary by adhesion of a coloring additive to the base material. The method provides for adjustment of the vibration frequency, maintenance and adjustment of the operating vacuum pressure in the upper cover, feed by pressurized injection of ionized air into the delivery line of the base material, feed at the injection pressure of the injector of the coloring additive, control of the operating temperature and of clogging of the mixer.

The use of adhesive materials in the base material is necessary when the base material has no intrinsic moisture or when the additive is not hygroscopic. In the case of coloring of atomized and/or granulated ceramic mixes, the intrinsic moisture is sufficient for adhesion of the colorant to the surface of the base particles. The use of adhesives is necessary when the particles to be colored are, for example, sands, glass grits, etc.

### Examples.

The apparatus described was used to color base material constituted by atomized ceramic powder having an average particle size >0.600 mm = 17 - 26%, >0.425 mm = 35 - 45%, >0.300 mm = 13 - 25 %, >0.250 mm = 6 - 13 %, >0.180 mm = 5 - 12 %, >0.125 mm = 3 - 12 %, >0.060 mm = 0 - 6%, < 0.060 mm = 0 - 1 %.

The average moisture content of the ceramic powder is between 4.5 - 6.5%; while the average apparent density is 0.95.99 Kg/dm³, the average fluidity is of 14" with Ford Cup without tip.

The coloring additive has an average particle size of 4-10 µm, a maximum particle size of 45 µm, an average moisture content from 0.1 to 0.7% and an average apparent density from 0.450 to 0.910 kg/dm³.

The atomized and/or granulated ceramic base material feeds the mixer continuously with a flow rate variable from 6 to 10 T/h, the coloring additive is fed with flow rates from 0.03% to 1.5% by weight of the base material, in the present example from 1.8 to 150 kg/h.

The mixer used has a diameter of 600 mm and a height measured between cover and outlet cone of 2200 mm. The operating temperature in the mixer varies between 20 and 40°C. The vacuum pressure measured at the pressure switch varies from -5 to -20 mm H₂O, as a function of the flow rates and coloring percentages.

The essential advantages of this invention are:
- Decrease of the percentage of colorant given the same coloration. Complete nebulization of the colorant in ultra-fine cloud and the high specific contact surface between sprinkled base material and nebulized colorant ensure a uniform coating of the granule of base material with colorant. Tests carried out resulted in a saving of between 5 and 15%, depending on the recipe, on the base materials and on the colorants used.
- Elimination of lumps of colorant. Due to the high hygroscopic properties of the colorants, one of the defects of dry coloring is imperfect disintegration of the small granules of oxide that form when the oxide comes into contact with the wet base material (4.5 - 6.5%). Nebulization of the colorant prior to contact with the base material eliminates this problem.

This resuts in two fundamental aspects related to the subsequent molding of ceramic tiles:
1. Drastic reduction and/or elimination of contaminating lumps with dimensions larger than 0.5 mm that pollute the surface of the pressed ceramic material, declassing it to second grade.
2. Drastic reduction and/or elimination of rupture points represented by undispersed lumps of coloring material. The colorant does not have plastic behavior, it cannot be pressed and in the form of a lump represents a rupture initiation point. The reduction or elimination thereof increases the mechanical strength of the pressed ceramic tile both before and after firing. This aspect is important above all when the pressed and dried ceramic article must support and withstand the various applications in the glazing line.
   - Reduction or elimination of the subsequent mechanical mixing. This enables a drastic reduction or elimination of mechanical stress, caused by rotating bars, paddles and hooks, on the material to be used subsequently in the molding step of the ceramic tiles. The mechanical mixing action breaks the granule of atomized and/or granulated material, thereby modifying the ideal particle size curve. This results in decreases in mechanical strength performances above all prior to firing. In the case of the addition of this invention to existing systems with mechanical mixing, the mechanical mixing times required are reduced to a quarter; this results in a drastic increase in the flow rates with reduction of mechanical stress.
   - Improved uniformity of coloring when using several colorants simultaneously. Nebulization of the various colorants inside the mixing chamber unifies their behavior regardless of the different physical conditions (moisture, particle size, apparent density, etc.) creating a uniform cloud of a mixture of colorants; this results in an improvement in the shade of coloring required.

The invention thus conceived is susceptible to numerous modifications and variants, all falling within the scope of the inventive concept. Moreover, all details can be replaced by technically equivalent elements.

## Claims

1. A system for the preparation of colored powder materials for the manufacture of ceramic tiles, the system comprising:
• a mixer (4) constituted by an upper cover (6) connected to the supply line (3) of the base material and by a mixing cylindrical chamber (5);
• a vibrating frame (9) located between upper cover and mixing chamber, the vibrating frame is connected with seal to the mixing cylindrical chamber (5);
• a perforated baffle (27) fixed to the vibrating frame; **characterized in that** the system further comprises
• a system for generating an operating vacuum pressure in the upper cover (6);
• an injection system of the colorant at the base of the mixing chamber (5).

2. The system according to claim 1, wherein located inside the upper cover is a sprinkling device (24) of the base material comprising:
• a telescoping cover (25) adjustable in height, inserted in the supply line, conical in shape in the part outside the supply line (3) and
• separator plates (26) fixed to a vibrating frame (9).

3. The system according to claim 1, wherein located inside the upper cover is a sprinkling device (24) of the base material comprising:
• a perforated telescoping cover (25) adjustable in height inserted in the supply line, conical in shape in the part outside the supply line (3) and
• a slotted cylindrical tube (31) fixed at the top of the conical cover (25) and partly inserted in the supply line (3) and partly forming, through the slots, a first distributor of the base material coming from the line (3) onto the perforated conical surface of the telescoping cover (25).

4. The system according to claim 1, wherein the perforated baffle (27) fixed to the vibrating frame has in the lower part a conveyor plate (30) integral with the vibrating frame.

5. The system according to claims 1-4, wherein an ionized air injection pipe (17) is connected to the supply line (3) upstream of the coupling in the upper part of the upper cover (6).

6. The system according to claims 1-5, wherein an ionized air injector (23) is located on the line (12) for connection between the battery of metering devices (11) for loading:
• the coloring material and the base of the mixer; or
• the coloring material and the base of the mixer and electrostatic charging systems are located on said pipe.

7. The system according to claim 1-6, wherein a pressure switch (18) is located on the upper chamber to adjust the vacuum pressure imparted on the cover (6) by a suction cyclone (20) through a volumetric suction valve of proportional type (21); preferably from the suction cyclone (20) there extends a recirculation pipe (22) of the base material of small size and coloring additive connected to the delivery line from the mixer cylinder.

8. The system according to claims 1-4, also comprising a discharge cone (22), preferably formed by a cone (22') and counter cone (22"), closing counterweight, and associated pneumatic cylinder (36) with discontinuous opening.

9. The system according to claim 1-4, wherein a line 12 for addition of the coloring additive is provided with an injector (34) with a conical nozzle (35) having an aerodynamic profile with spiral shaped radial grooves.

10. The system according to claims 1-9, wherein the cyclone system (20) is formed by a cyclone (2) and by an extractor (33) and by lines (19, 37, 32, 38) and valves (V1A, V1 B, V2A, V2B) that enable through opening and closing of said recirculation valves, evacuation and washing of the fine powders of pigmented base material.

11. A method for the preparation of colored materials in powder form for the manufacture of ceramic tiles using the system of claim 1, wherein:
• atomized and/or granulated ceramic material of uniform particle size is fed uniformly into a chamber (6) under vacuum pressure with respect to the mixing chamber (5) in connection with said chamber through a vibrated perforated baffle (27);
• injection from the base of the mixing chamber of the coloring particles;
• formation of a spray of atomized and/or granulated ceramic material inside the mixing chamber (5), falling by gravity;
• mixing of the ceramic material in granules with the rising current of coloring particles. powder.

12. The method according to claim 11, wherein ionized air is fed into the supply line (1) of the granulated ceramic material upstream of the coupling in the upper part of the upper cover (6).

13. The method according to claim 11 and/or 12, wherein ionized air is injected with the coloring material into the line (12) for connection between the battery of metering devices (11) for loading the coloring material and the base of the mixer (7); preferably
the pressure set on the cover (6) is adjusted through a pressure switch (18) on the upper chamber and through a volumetric suction valve of proportional type (21) to adjust the suction flow from a suction cyclone (20); preferably the operating temperature in the mixer varies between 20 and 40°C and the vacuum pressure measured at the pressure switch (18) varies from -5 to -20 mm H₂O.

14. The method according to claim 11, wherein:
• the coloring additive is mixed to an electrostatically chargeable additive and the latent charges of the coloring additive are activated through the action of an electrostatic field before injection and the electrostatic charges of the base material are neutralized through the action of ionized air injected into the supply line; or
• a specific adhesive of the coloring additive is added to the base material, preferably the base material is constituted by sands, glass grits.

15. The method according to claim 11, wherein the base material comprises atomized ceramic powder having:
an average particle size >0.600 mm = 17 - 26%, >0.425 mm = 35 - 45%, >0.300 mm = 13 - 25 %, >0.250 mm = 6 - 13 %, >0.180 mm = 5 - 12 %, >0.125 mm = 3 - 12 %, >0.060 mm = 0 - 6%, < 0.060 mm = 0 - 1 %;
• an average moisture content from 4.5 - 6.5 %;
• an average apparent density of 0.90-0.99 kg/dm³,
• an average fluidity of 14" with Ford Cup without tip;
preferably the coloring additive has an average particle size of 4 - 10 µm, a maximum particle size of 45 µm, an average moisture content from 0.1 to 0.7 % and an average apparent density of 0.450 to 0.910 kg/dm³.

## Patentansprüche

1. System zur Zubereitung gefärbter Pulvermaterialien zur Herstellung von Keramikfliesen, wobei das System aufweist:
• einen Mischer (4), der durch aus einer oberen Abdeckung (6), die mit der Basismaterial-Versorgungsleitung verbunden ist, und aus einer zylindrischen Mischkammer (5) besteht;
• einen Schüttelrost (9), der zwischen der oberen Abdeckung und der Mischkammer angeordnet ist, wobei der Schüttelrost mit der zylindrischen Mischkammer (5) dicht verbunden ist;
• eine perforierte Leitplatte (27), die am Schüttelrost fest angebracht ist; **dadurch gekennzeichnet, dass** das System außerdem aufweist
• ein System zur Erzeugung eines Unterdruck-Betriebsdrucks in der oberen Abdeckung (6);
• ein Farbstoff-Einspeisungssystem an der Basis der Mischkammer (5).

2. System nach Anspruch 1, wobei innerhalb der oberen Abdeckung eine Basismaterial-Berieselungseinrichtung (24) angeordnet ist, aufweisend:
• eine teleskopierbare Abdeckung (25), die höheneinstellbar und in die Versorgungsleitung eingesetzt ist, und die im Teil außerhalb der Versorgungsleitung (3) konische Gestalt aufweist, und
• Trennplatten (26), die am Schüttelrost (9) fest angebracht sind.

3. System nach Anspruch 1, wobei innerhalb der oberen Abdeckung eine Basismaterial-Berieselungseinrichtung (24) angeordnet ist, aufweisend:
• eine perforierte teleskopierbare Abdeckung (25), die höheneinstellbar und in die Versorgungsleitung eingesetzt ist, und die im Teil außerhalb der Versorgungsleitung (3) konische Gestalt aufweist, und
• ein geschlitztes zylindrisches Rohr (31), das an der Oberseite der konischen Abdeckung (25) fest angebracht und teilweise in die Versorgungsleitung (3) eingesetzt ist und über Schlitze einen ersten Verteiler für das aus der Leitung (3) kommende Basismaterial auf die perforierte konische Oberfläche der teleskopierbaren Abdeckung ()25) Basismaterial bildet.

4. System nach Anspruch 1, wobei die am Schüttelrost fest angebrachte perforierte Leitplatte (27) im unteren Teil eine Förderplatte (30) aufweist, die mit dem Schüttelrost integral gebildet ist.

5. System nach einem der Ansprüche 1-4, wobei ein Einspritzrohr (17) für ionisierte Luft stromauf des Verbinders im oberen Teil der oberen Abdeckung (6) mit der Versorgungsleitung (3) verbunden ist.

6. System nach einem der Ansprüche 1-5, wobei ein Injektor (23) für ionisierte Luft auf der Leitung (12) zur Verbindung zwischen der Mehrzahl von Dosiereinrichtungen (11) angeordnet ist, um folgendes zu laden:
• das Farbstoffmaterial und das Basismaterial des Mischers; oder
• das Farbstoffmaterial und das Basismaterial des Mischers sowie elektrostatische Ladesysteme, die auf dem Rohr angeordnet sind.

7. System nach einem der Ansprüche 1-6, wobei ein Druckschalter (18) auf der oberen Kammer angeordnet ist, um den Unterdruck einzustellen, der auf die Abdeckung (6) durch einen Ansaugzyklon über ein volumetrisches Proportionalansaugventil (21) ausgeübt wird; wobei sich bevorzugt ausgehend von dem Ansaugzyklon (20) ein Rezirkulationsrohr (22) für das Basismaterial und Farbstoffadditive zur Förderleitung von dem Mischzylinder (21) erstreckt.

8. System nach einem der Ansprüche 1-4, außerdem aufweisend einen Austragkonus (22), der bevorzugt aus einem Konus (22') und einem Gegenkonus (22"), einem Schließausgleichsgewicht und einem zugeordneten Pneumatikzylinder (36) mit diskontinuierlicher Öffnung besteht.

9. System nach einem der Ansprüche 1-4, wobei eine Leitung (12) zum Zusetzen von Farbstoffadditiv mit einem Injektor (34) mit einer konischen Düse (35) vorgesehen ist, die ein aerodynamisches Profil mit spiralförmigen Radialrillen aufweist.

10. System nach einem der Ansprüche 1-9, wobei das Zyklonsystem (20) durch einen Zyklon (2) und durch einen Extraktor (33) sowie durch Leitungen (19, 37, 32, 38) und Ventile (V1A, V1 B, V2A, V2B) gebildet ist, wodurch durch Schließen und Öffnen der Rezirkulationsventile ein Abtransport und ein Waschen der feinen Pulver aus pigmentiertem Basismaterial ermöglicht ist.

11. Verfahren zur Zubereitung gefärbter Pulvermaterialien zur Herstellung von Keramikfliesen unter Verwendung des Systems nach Anspruch 1, wobei:
• zerstäubtes und/oder granuliertes Keramikmaterial einheitlicher Partikelgröße gleichmäßig in eine Kammer (6) unter Unterdruck in Bezug auf die Mischkammer (5) in Verbindung mit dieser Kammer über ein perforierte Rüttelplatte (27) zugeführt wird;
• die Farbstoffpartikel ausgehend von der Basis der Mischkammer eingespeist werden;
• ein durch Schwerkraft absinkender Sprühnebel aus zerstäubtem und/oder granuliertem Keramikmaterial in der Mischkammer(5) gebildet wird;
• das Keramikmaterial mit dem aufsteigenden Farbstoffpartikelpulverstrom zu Granulat gemischt wird.

12. Verfahren nach Anspruch 11, wobei ionisierte Luft in die Versorgungsleitung (1) für das granulierte Keramikmaterial stromauf des Verbinders im oberen Teil der oberen Abdeckung (6) zugeführt wird.

13. Verfahren nach Anspruch 11 und/oder 12, wobei ionisierte Luft mit dem Farbstoffmaterial in die Leitung (12) zur Verbindung zwischen der Mehrzahl von Dosiereinrichtungen zum Laden des Farbstoffmaterials und des Basismaterial des Mischers (7) eingespeist wird; wobei bevorzugt
der auf der Abdeckung (6) eingestellte Druck durch einen Druckschalter (18) auf der oberen Kammer sowie durch ein volumetrisches Proportionalansaugventil (21) eingestellt wird, um die Saugströmung von einem Ansaugzyklon (20) einzustellen; wobei bevorzugt die Betriebstemperatur im Mischer zwischen 20 and 40°C und der Unterdruck, gemessen am Druckschalter (18) von -5 to -20 mm H₂O variiert.

14. Verfahren nach Anspruch 11, wobei:
• das Farbstoffadditiv einem elektrostatisch aufladbaren Additiv beigemischt wird, und die Latentladungen des Farbstoffadditivs durch Einwirkung eines elektrischen Felds vor der Einspeisung aktiviertund die elektrostatischen Ladungen des Basismaterials durch die Einwirkung der ionisierten Luft, die in die Versorgungsleitung eingespeist werden, oder
• dem Basismaterial, bevorzugt dem Basismaterial, das aus Sänden und Glaskörnern besteht, ein spezielles Klebemittel zugesetzt wird.

15. Verfahren nach Anspruch 11, wobei das Basismaterial zerstäubtes Keramikpulver umfasst, aufweisend:
eine mittlere Partikelgröße >0,600 mm = 17 - 26%, >0,425 mm = 35 - 45%, >0,300 mm = 13 - 25 %, >0,250 mm = 6 - 13 %, >0,180 mm = 5-12 %, >0,125 mm = 3 - 12 %, >0,060 mm = 0 - 6%, < 0,060 mm = 0 - 1%;
• einen mittleren Feuchtigkeitsgehalt von 4,5 - 6,5 %;
• eine mittlere virtuelle Dichte von 0,90-0,99 kg/dm³;
• ein mittleres Fließvermögen von 14", ermittel mit spitzenfreiem Ford Becher;
wobei bevorzugt das Farbstoffadditiv einen mittlere Partieklgröße von 4 - 10 µm, eine maximale Partikelgröße von 45 µm, einen mitleren Feuchtigkeitsgehalt von 0,1 to 0,7 % und eine mittlere virtuelle Dichte von 0,450 to 0,910 kg/dm³ aufweist.

## Revendications

1. Système pour la préparation de matériaux en poudre colorés pour la fabrication de carreaux en céramique, le système comprenant :
- un mélangeur (4) constitué d'un couvercle supérieur (6) relié à la tuyauterie d'alimentation (3) du matériau de base et d'une chambre cylindrique de mélange (5) ;
- un cadre vibrant (9) situé entre le couvercle supérieur et la chambre de mélange, le cadre vibrant étant connecté avec joint à la chambre cylindrique de mélange (5) ;
- un déflecteur perforé (27) fixé au cadre vibrant ; **caractérisé en ce que** le système comprend en outre
- un système pour générer une pression sous vide opérationnelle dans le couvercle supérieur (6) ;
- un système d'injection du colorant au niveau de la base de la chambre de mélange (5).

2. Système selon la revendication 1, dans lequel à l'intérieur du couvercle supérieur, se trouve un dispositif d'arrosage (24) du matériau de base comprenant :
- un couvercle télescopique (25) ajustable en hauteur, inséré dans la tuyauterie d'alimentation, de forme conique dans la partie à l'extérieur de la tuyauterie d'alimentation (3) et
- des plaques séparatrices (26) fixées à un cadre vibrant (9).

3. Système selon la revendication 1, dans lequel à l'intérieur du couvercle supérieur, se trouve un dispositif d'arrosage (24) du matériau de base comprenant :
- un couvercle télescopique perforé (25) ajustable en hauteur inséré dans la tuyauterie d'alimentation, de forme conique dans la partie à l'extérieur de la tuyauterie d'alimentation (3) et
- un tube cylindrique fendu (31) fixé au niveau de la partie supérieure du couvercle conique (25) et inséré partiellement dans la tuyauterie d'alimentation (3) et formant partiellement, à travers les fentes, un premier distributeur du matériau de base provenant de la tuyauterie (3) sur la surface conique perforée du couvercle télescopique (25).

4. Système selon la revendication 1, dans lequel le déflecteur perforé (27) fixé au cadre vibrant possède dans la partie inférieure une plaque de transport (30) d'un seul tenant avec le cadre vibrant.

5. Système selon les revendications 1 à 4, dans lequel une tuyauterie d'injection d'air ionisé (17) est reliée à la tuyauterie d'alimentation (3) en amont du raccord dans la partie supérieure du couvercle supérieur (6).

6. Système selon les revendications 1 à 5, dans lequel un injecteur d'air ionisé (23) se trouve sur la tuyauterie (12) pour raccordement entre la série de dispositifs de mesure (11) pour charger ;
- le matériau colorant et la base du mélangeur ; ou
- le matériau colorant et la base du mélangeur et des systèmes de chargement électrostatiques se trouvent sur ledit tuyau.

7. Système selon les revendications 1 à 6, dans lequel un pressostat (18) se trouve sur la chambre supérieure pour ajuster la pression sous vide appliquée sur le couvercle (6) au moyen d'un cyclone d'aspiration (20) à travers un clapet d'aspiration volumétrique du type proportionnel (21) ; de préférence à partir du cyclone d'aspiration (20) s'étend un tuyau de recirculation (22) du matériau de base de petite taille et d'additif colorant relié à la tuyauterie de distribution à partir du cylindre du mélangeur.

8. Système selon les revendications 1 à 4, comprenant également un cône de décharge (22), de préférence formé d'un cône (22') et d'un contre-cône (22"), un contrepoids de fermeture, et un cylindre pneumatique associé (36) avec une ouverture discontinue.

9. Système selon les revendications 1 à 4, dans lequel une tuyauterie 12 pour addition de l'additif colorant est pourvue d'un injecteur (34) avec une buse conique (35) ayant un profil aérodynamique avec des rainures radiales en spirale.

10. Système selon les revendications 1 à 9, dans lequel le système de cyclone (20) est formé d'un cyclone (2) et d'un extracteur (33) et de tuyauteries (19, 37, 32, 38) et de clapets (V1A, V1B, V2A, V2B) qui permettent par le biais d'une ouverture et d'une fermeture desdits clapets de recirculation, l'évacuation et le lavage des poudres fines de matériau de base pigmenté.

11. Procédé de préparation de matériaux colorés sous forme de poudre pour la fabrication de carreaux en céramique grâce au système de la revendication 1, comprenant :
- la fourniture uniforme d'un matériau en céramique atomisé et/ou granulé ayant une taille de particule uniforme dans une chambre (6) à une pression sous vide par rapport à la chambre de mélange (5) en liaison avec ladite chambre par le biais d'un déflecteur perforé vibrant (27) ;
- l'injection à partir de la base de la chambre de mélange des particules colorantes ;
- la formation d'une pulvérisation de matériau céramique atomisé et/ou granulé à l'intérieur de la chambre de mélange (5), tombant par gravité ;
- le mélange du matériau céramique en granules avec le courant ascendant de la poudre de particules colorantes.

12. Procédé selon la revendication 11, dans lequel de l'air ionisé est fourni à la tuyauterie d'alimentation (1) du matériau céramique granulé en amont du couplage dans la partie supérieure du couvercle supérieur (6).

13. Procédé selon la revendication 11 et/ou 12, dans lequel de l'air ionisé est injecté avec le matériau colorant dans la tuyauterie (12) pour raccordement entre la série de dispositifs de mesure (11) pour chargement du matériau colorant et de la base du mélangeur (7) ; de préférence, la pression définie sur le couvercle (6) est ajustée par le biais d'un pressostat (18) sur la chambre supérieure et par le biais d'un clapet d'aspiration volumétrique de type proportionnel (21) pour ajuster l'écoulement par aspiration à partir d'un cyclone d'aspiration (20) ; de préférence, la température opérationnelle dans le mélangeur varie entre 20 et 40°C et la pression sous vide mesurée au niveau du pressostat (18) varie de -5 à -20 mm de H₂O.

14. Procédé selon la revendication 11, dans lequel :
- l'additif colorant est mélangé à un additif chargeable de manière électrostatique et les charges latentes de l'additif colorant sont activées par le biais de l'action d'un champ électrostatique avant injection et les charges électrostatiques du matériau de base sont neutralisées par le biais de l'action de l'air ionisé injecté dans la tuyauterie d'alimentation ; ou
- un adhésif spécifique de l'additif colorant est ajouté au matériau de base, de préférence, le matériau de base est constitué de sables, de grains de verre.

15. Procédé selon la revendication 11, dans lequel le matériau de base comprend de la poudre céramique atomisée ayant :
- une taille de particule moyenne > 0,600 mm = 17 - 26%, > 0,425 mm = 35 - 45%, > 0,300 mm = 13 - 25%, > 0,250 mm = 6 - 13%, > 0,180 mm = 5 - 12%, > 0,125 mm = 3 - 12%, > 0,060 mm = 0 - 6%, < 0,060 mm = 0 - 1% ;
- une teneur en humidité moyenne de 4,5 - 6,5% ;
- une densité apparente moyenne de 0,90 à 0,99 kg/dm³ ;
- une fluidité moyenne de 14" avec coupe de Ford sans pointe ;
de préférence, l'additif colorant a une taille de particule moyenne de 4 à 10 µm, une taille de particule maximale de 45 µm, une teneur en humidité moyenne de 0,1 à 0,7% et une densité apparente moyenne de 0,450 à 0,910 kg/dm³.
